# EUROPEAN PATENT APPLICATION

(11) **EP 2 394 813 A1**
(43) Date of publication of application: **14.12.2011**
(21) Application number: 10738543.7
(22) Date of filing: 03.02.2010
(51) Int. Cl.: B32B 17/10, C03C 27/12

(54) **INTERMEDIATE FILM FOR LAMINATED GLASS, METHOD FOR PRODUCING INTERMEDIATE FILM FOR LAMINATED GLASS, AND LAMINATED GLASS**

(30) Priority: 03.02.2009 JP 2009022906
(71) Applicant: Sekisui Chemical Co., Ltd., Osaka 530-8565 (JP)
(72) Inventor: FUTAMURA, Takahiro, Kouka-shi Shiga 528-8585 (JP); OOMOTO, Izumi, Kouka-shi Shiga 528-8585 (JP)
(74) Representative: TER MEER - STEINMEISTER & PARTNER GbR
(86) International application number: PCT/JP2010/051497
(87) International publication number: WO 2010/090212

(57) **Abstract**

The present invention provides: an interlayer film for laminated glass having high adhesiveness to components for laminated glass such as a PET film and having high transparency; and a laminated glass comprising the interlayer film for laminated glass.

An interlayer film 2 for laminated glass comprises a resin including an ethylene structural unit, a (meth) acrylate ester structural unit, and a structural unit having a glycidyl group. A laminated glass 1 comprises: a first and a second component 3, 4 for laminated glass; and an interlayer film 2 for laminated glass interposed between the first and the second component 3, 4 for laminated glass.

## Description

### TECHNICAL FIELD

The present invention relates to an interlayer film for laminated glass, a production method of the interlayer film having high adhesiveness and high transparency, and a laminated glass containing the interlayer film for laminated glass.

### BACKGROUND ART

A laminated glass is a safety glass because few glass fragments are scattered even if it is broken by impact from the outside. Therefore, a laminated glass is widely employed in the windowpanes of automobiles, railway cars, aircrafts, vessels, buildings and the like.

An interlayer film is interposed between a pair of glass plates to produce the laminated glass. Normally, the interlayer film includes a film made of polyvinyl acetal resin, ethylene-vinyl acetate copolymer resin, ethylene-acrylic copolymer resin, polyurethane resin, sulfur-containing polyurethane resin, or polyvinyl alcohol resin.

As an example of interlayer films for laminated glass, PTL 1 discloses an interlayer film containing ethylene-vinyl acetate copolymers, a silane coupling agent, polyethyleneimine, and a clarifying agent. The silane coupling agent includes at least one functional group selected from the group consisting of an ureido group, a methacryloxy group, and an acryloxy group.

### CITATION LIST

### Patent Literature

PTL 1: JP 2007-119612 A

### SUMMARY OF INVENTION

The laminated glass may include an interlayer film interposed between a glass plate and a polyethylene terephthalate film (hereinafter, abbreviated as PET film).

The interlayer film disclosed in Patent Document 1 may fail to adhere to a PET film firmly. In addition, in a case where an amount of the silane coupling agent is increased so that the adhesiveness of the interlayer film to a PET film is enhanced, the transparency of the interlayer film tends to be lowered.

An object of the present invention is to provide an interlayer film for laminated glass, a production method of the interlayer film having high adhesiveness to components for laminated glass such as a PET film and having high transparency, and a laminated glass containing the interlayer film for laminated glass.

The present invention provides an interlayer film for laminated glass, which comprises a resin including an ethylene structural unit, a (meth)acrylate ester structural unit, and a structural unit having a glycidyl group.

In a particular aspect of the interlayer film for laminated glass according to the present invention, the interlayer film for laminated glass comprises a resin including a first structural unit represented by a following formula (1), a second structural unit represented by a following formula (2), and a third structural unit represented by a following formula (3).

[Chem. 1] *⁅CH₂-CH₂⁆* Formula (1)

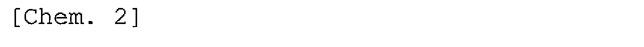

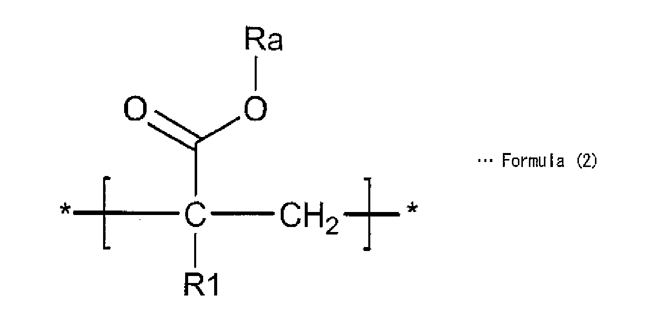

In the formula (2), R1 represents a hydrogen atom or a methyl group, and Ra represents an alkyl group having 1 to 5 carbon atoms.

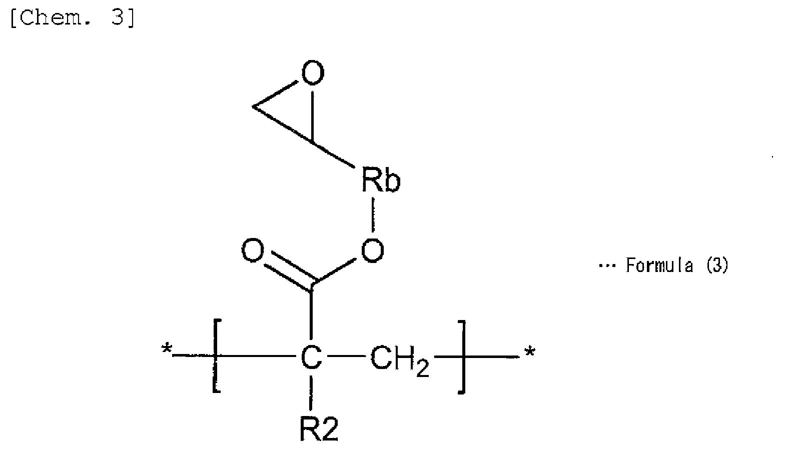

In the formula (3), R2 represents a hydrogen atom or a methyl group, and Rb represents an alkylene group having 1 to 5 carbon atoms.

In another particular aspect of the interlayer film for laminated glass according to the present invention, an amount of the first structural unit represented by the formula (1) is larger than a sum of an amount of the second structural unit represented by the formula (2) and an amount of the third structural unit represented by the formula (3).

In still another particular aspect of the interlayer film for laminated glass according to the present invention, the resin includes 67 to 78% by weight of the first structural unit represented by the formula (1), 14 to 27% by weight of the second structural unit represented by the formula (2), and 3 to 8% by weight of the third structural unit represented by the formula (3).

In another particular aspect of the interlayer film for laminated glass according to the present invention, an ethylene-vinyl acetate copolymer is further comprised.

In still another particular aspect of the interlayer film for laminated glass according to the present invention, an amount of the resin including the first structural unit represented by the formula (1), the second structural unit represented by the formula (2), and the third structural unit represented by the formula (3) is 5% to 70% by weight in 100% by weight of a sum of the resin and the ethylene-vinyl acetate copolymer.

In another particular aspect of the interlayer film for laminated glass according to the present invention, a compound having an amino group is further comprised.

In still another particular aspect of the interlayer film for laminated glass according to the present invention, the compound having an amino group is a silane coupling agent.

The present invention further provides a production method of an interlayer film for laminated glass, which comprises
producing an interlayer film for laminated glass with use of a resin including an ethylene structural unit, a (meth)acrylate ester structural unit, and a structural unit having a glycidyl group.

In a particular aspect of the production method of an interlayer film for laminated glass, the production method comprises producing an interlayer film for laminated glass with use of a resin including a first structural unit represented by a following formula (1), a second structural unit represented by a following formula (2), and a third structural unit represented by a following formula (3).

[Chem. 4] *⁅CH₂-CH₂⁆* Formula (1)

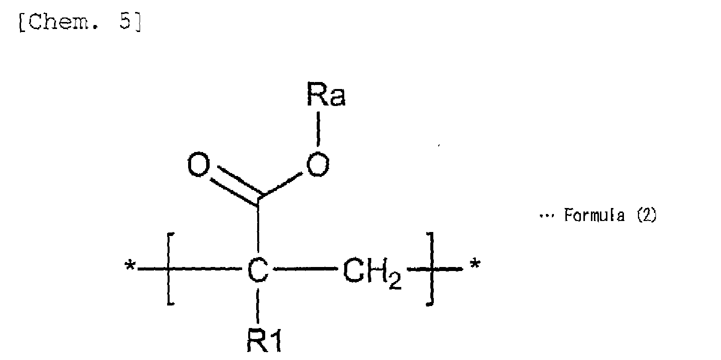

In the formula (2), R1 represents a hydrogen atom or a methyl group, and Ra represents an alkyl group having 1 to 5 carbon atoms.

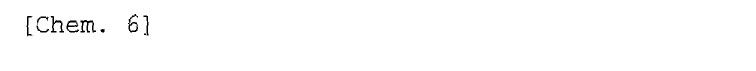

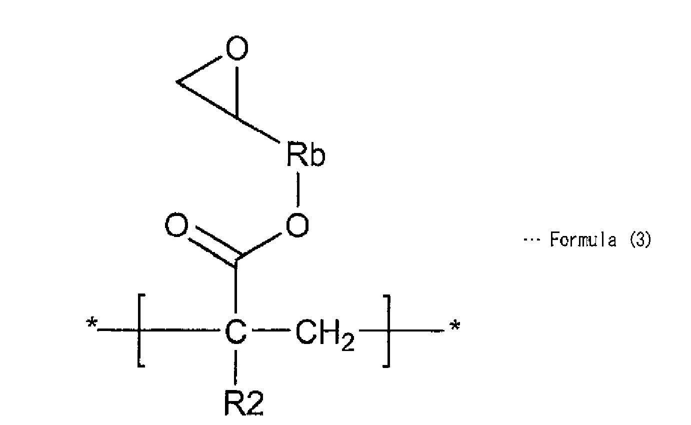

In the formula (3), R2 represents a hydrogen atom or a methyl group, and Rb represents an alkylene group having 1 to 5 carbon atoms.

A laminated glass according to the present invention comprises: a first and a second components for laminated glass; and an interlayer film for laminated glass prepared according to the present invention, the interlayer film being interposed between the first and the second component for laminated glass.

In a particular aspect of the laminated glass according to the present invention, one of the first and the second component for laminated glass is a polyethylene terephthalate film.

### ADVANTAGEOUS EFFECTS OF INVENTION

Since the interlayer film for laminated glass according to the present invention comprises a resin including an ethylene structural unit, a (meth) acrylate ester structural unit, and a structural unit having a glycidyl group, it is possible to enhance the adhesiveness of the interlayer film to components for laminated glass such as a PET film. In addition, the interlayer film for laminated glass is allowed to have both high adhesiveness and high transparency.

In a case where the interlayer film comprises a resin including the first to third structural units represented by the formulae (1) to (3), the adhesiveness of the interlayer film to components for laminated glass such as a PET film can be further enhanced. In addition, the interlayer film for laminated glass is allowed to have both higher adhesiveness and higher transparency.

In the production method of an interlayer film for laminated glass according to the present invention, a resin including an ethylene structural unit, a (meth)acrylate ester structural unit, and a structural unit having a glycidyl group is used. Therefore, the obtained interlayer film is allowed to have high adhesiveness to components for laminated glass such as a PET film. Further, it is possible to provide the interlayer film having high transparency.

In a case where the interlayer film comprises a resin including the first to third structural units represented by the formulae (1) to (3), it is possible to provide the interlayer film having higher adhesiveness to components for laminated glass such as a PET film. Further, it is possible to provide the interlayer film having higher transparency.

### BRIEF DESCRIPTION OF THE DRAWINGS

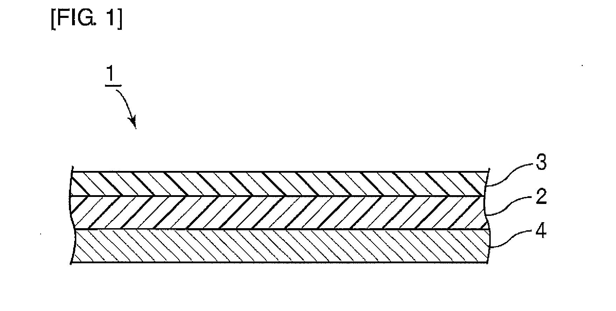

Fig. 1 is a front cross-sectional view of a partially cutout portion of a laminated glass according to one embodiment of the present invention.

### DESCRIPTION OF EMBODIMENTS

Hereinafter, the present invention is specifically described.

### (Interlayer film for laminated glass)

An interlayer film for laminated glass according to the present invention comprises a resin including an ethylene structural unit, a (meth)acrylate ester structural unit, and a structural unit having a glycidyl group (hereinafter, abbreviated as resin A). The resin A includes the ethylene structural unit as a first structural unit, the (meth) acrylate ester structural unit as a second structural unit, and the structural unit having a glycidyl group as a third structural unit. The resin A preferably includes the ethylene structural unit, the (meth)acrylate ester structural unit, and the structural unit having a glycidyl group as recurring structural units.

To achieve the further enhanced adhesiveness and transparency of the interlayer film, the interlayer film for laminated glass according to the present invention preferably comprises a resin including a first structural unit represented by a following formula (1), a second structural unit represented by a following formula (2), and a third structural unit represented by a following formula (3) (hereinafter, abbreviated as resin Aa). Namely, the resin A is preferably the resin Aa. The resin Aa preferably includes the first to third structural units represented by the following formulae (1) to (3) as recurring structural units.

[Chem. 7] *⁅CH₂-CH₂⁆* Formula (1)

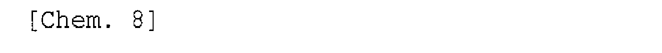

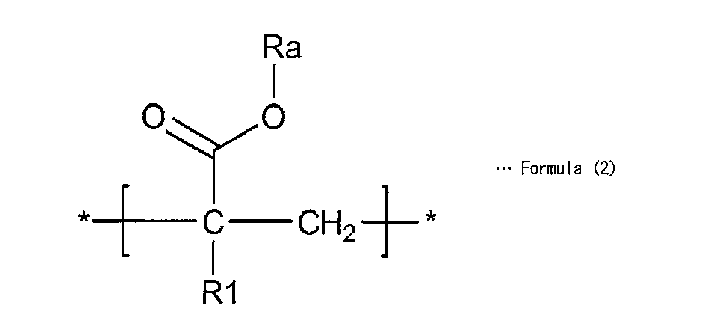

In the formula (2), R1 represents a hydrogen atom or a methyl group, and Ra represents an alkyl group having 1 to 5 carbon atoms. The R1 in the formula (2) preferably represents a hydrogen atom.

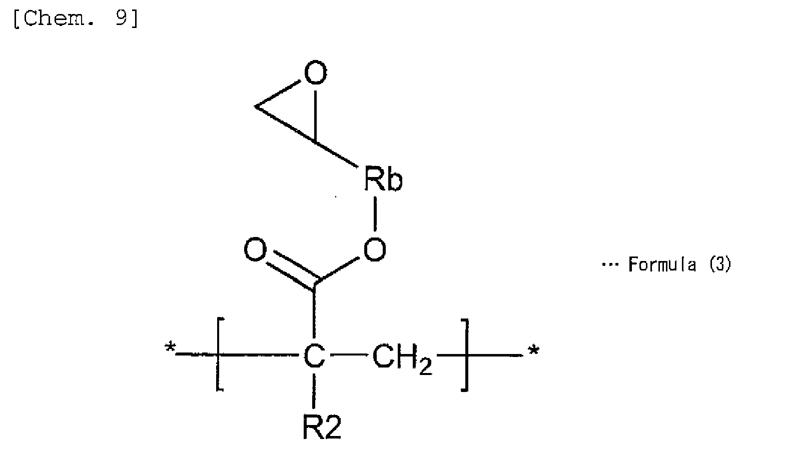

In the formula (3), R2 represents a hydrogen atom or a methyl group, and Rb represents an alkylene group having 1 to 5 carbon atoms. The R2 in the formula (3) preferably represents a methyl group.

The first structural unit represented by the formula (1) corresponds to the ethylene structural unit. The second structural unit represented by the formula (2) corresponds to the (meth)acrylate ester structural unit. The third structural unit represented by the formula (3) corresponds to the structural unit having a glycidyl group. The ethylene structural unit is preferably the first structural unit represented by the formula (1). The (meth) acrylate ester structural unit is preferably the second structural unit represented by the formula (2). The structural unit having a glycidyl group is preferably the third structural unit represented by the formula (3). In a case where three structural units of the resin A mentioned above are the first to third structural units represented by the formulae (1) to (3), the adhesiveness of the obtained interlayer film is allowed to have higher adhesiveness to components for laminated glass such as a PET film. In addition, the interlayer film for laminated glass is allowed to have both higher adhesiveness and higher transparency.

The resin A or Aa preferably includes a first structural unit derived from ethylene represented by the formula (1), a second structural unit derived from alkyl (meth) acrylic acid represented by the formula (2), and a third structural unit derived from a glycidyl group-containing (meth) acrylate represented by the formula (3). The resin A or Aa preferably comprises an ethylene-alkyl (meth)acrylate-glycidyl group-containing (meth)acrylate copolymer. The "(meth)acrylate" indicates acrylate or methacrylate. The "(meth)acrylic" indicates acrylic or methacrylic.

The resin A or Aa may comprise alternating, a random copolymer or a block copolymer of the first structural unit, the second structural unit, and the third structural unit.

An interlayer film comprising the resin A or Aa including the first to third structural units has the transparency that is as good as that of an interlayer film for laminated glass comprising an ethylene-vinyl acetate copolymer (EVA). In addition, the interlayer film comprising the resin A or Aa has high adhesiveness to components for laminated glass, especially to a PET film. Further, the interlayer film comprising the resin A or Aa also has high adhesiveness to a glass plate.

The Ra in the formula (2) represents an alkyl group having 1 to 5 carbon atoms. The alkyl group having 6 or more carbon atoms tends to lower the adhesiveness of the interlayer film to a PET film. In order to further enhance the adhesiveness to a PET film, the Ra in the formula (2) preferably represents an alkyl group having 1 to 3 carbon atoms, more preferably an ethyl group or a methyl group, and further preferably a methyl group. Namely, the second structural unit represented by the formula (2) is preferably a structural unit represented by the below formula (2A).

It is to be noted that the Ra in the formula (2) may represent an alkyl group having a straight-chain or branch structure. An alkyl group having a straight-chain structure is more preferable as the Ra in the formula (2).

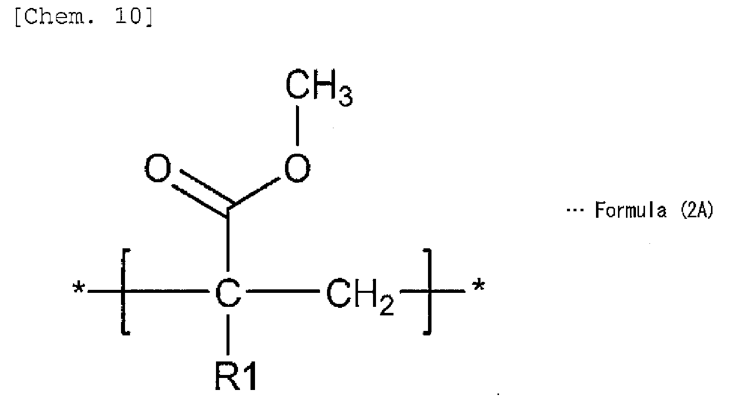

In the formula (2A), R1 represents a hydrogen atom or a methyl group. The R1 in the formula (2A) is preferably a hydrogen atom.

The Rb in the formula (3) represents an alkylene group having 1 to 5 carbon atoms. The alkylene group having 6 or more carbon atoms tends to lower the adhesiveness of the interlayer film to a PET film. Since the adhesiveness to a PET film can be further enhanced, the Rb in the formula (3) preferably represents an alkylene group having 1 to 3 carbon atoms, more preferably an ethylene group or a methylene group, further preferably a methylene group. Namely, the third structural unit represented by the formula (3) is preferably a structural unit represented by the below formula (3A).

It is to be noted that the Rb in the formula (3) may be an alkylene group having a straight-chain or branch structure. An alkylene group having a straight-chain structure is more preferable as the Rb in the formula (3).

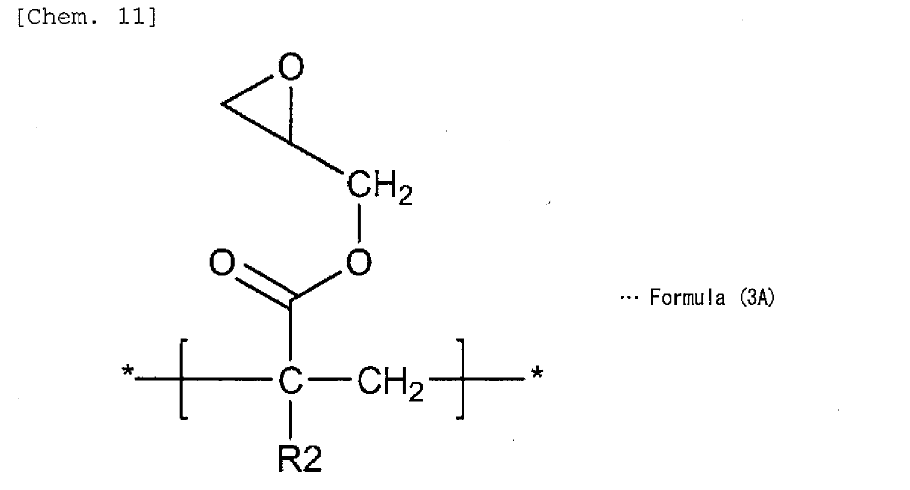

In the formula (3A), R2 represents a hydrogen atom or a methyl group, and Rb represents an alkylene group having 1 to 5 carbon atoms. The R2 in the formula (3A) is preferably a methyl group.

To achieve the further enhanced adhesiveness of the interlayer film to a PET film, the Ra in the formula (2) is preferably a methyl group and the Rb in the formula (3) is preferably a methylene group. In such a case, the resin A or Aa is an ethylene-methyl (meth)acrylate-glycidyl (meth)acrylate copolymer. Accordingly, the resin A or Aa is preferably an ethylene-methyl (meth)acrylate-glycidyl (meth) acrylate copolymer. It is to be noted that the resin A or Aa may have a structural unit other than the above first, second and third structural units.

To achieve the further enhanced transparency of the interlayer film, the amount of the first structural unit in the resin A or Aa is preferably larger than the amounts of the second and third structural units, and is more preferably larger than the sum of the amounts of the second and third structural units. The amount of the first structural unit among the amounts of the first to third structural units significantly affects the transparency of the obtained interlayer film.

The amount of the first structural unit in the resin A or Aa is preferably 45% by weight or more and preferably 90% by weight or less. A more preferable lower limit thereof is 60% by weight, a further preferable lower limit thereof is 65% by weight, and a particularly preferable lower limit thereof is 67% by weight. A more preferable upper limit thereof is 89% by weight, a further preferable upper limit thereof is 78% by weight, and a particularly preferable upper limit thereof is 70% by weight. The amount of the first structural unit in the resin A or Aa preferably falls within the range of 60% to 90% by weight and more preferably within the range of 67% to 78% by weight. When the amount of the first structural unit is below the above-mentioned upper limit, the transparency of the interlayer film can be further enhanced. When the amount of the first structural unit is exceeding the above-mentioned lower limit, blocking of the interlayer films in storage can be further prevented.

The resin A or Aa preferably includes 45% to 90% by weight of the first structural unit, 9% to 40% by weight of the second structural unit, and 1% to 15% by weight of the third structural unit. Further, the resin A or Aa more preferably includes 60% to 89% by weight of the first structural unit, 10% to 30% by weight of the second structural unit, and 1% to 10% by weight of the third structural unit. In such a case, the adhesiveness and the transparency of the interlayer film for laminated glass are further enhanced. The lower limit of the amount of the second structural unit is more preferably 14% by weight and further preferably 24% by weight. The upper limit thereof is more preferably 27% by weight. The lower limit of the amount of the third structural unit is more preferably 3% by weight and further preferably 6% by weight. The upper limit thereof is more preferably 8% by weight. Here, it is particularly preferable that the resin A or Aa includes 67% to 78% by weight of the first structural unit, 14% to 27% by weight of the second structural unit, and 3% to 8% by weight of the third structural unit.

The amounts of the first, second, and third structural units can be measured by using a method in accordance with ISO 8985. A Fourier Transform Infrared Spectrometer (FT-IR), for example, is used as a measuring device.

An amount of 100% by weight of the interlayer film for laminated glass preferably contains 4% to 100% by weight, more preferably 10% to 100% by weight, and further preferably 20% to 50 % by weight of the resin A or Aa. The entire interlayer film may be formed by the resin A or Aa. The entire resin component contained in the interlayer film may be formed by the resin A or Aa. The amount of the resin A or Aa within the above-mentioned range can further enhance the adhesiveness and the transparency of the interlayer film for laminated glass.

In order to facilitate the production of the interlayer film, the lower limit of the melt flow rate (MFR) of the resin A or Aa is preferably 1 g/ 10 min. , more preferably 2 g/ 10 min., and further preferably 3 g/ 10 min. The upper limit thereof is preferably 10 g/min., more preferably 9 g/ 10 min., and further preferably 8 g/ 10 min.

The interlayer film for laminated glass according to the present invention may comprise an ethylene-vinyl acetate copolymer, in addition to the resin A or Aa.

The ethylene-vinyl acetate copolymer may be non-crosslinked or crosslinked. Further, the ethylene-vinyl acetate copolymer may comprise a modified resin of ethylene-vinyl acetate such as a saponified ethylene-vinyl acetate copolymer. The ethylene-vinyl acetate copolymer can be obtained by using a conventionally known method.

The lower limit of the vinyl acetate contained in the ethylene-vinyl acetate copolymer is preferably 20% by weight, more preferably 25% by weight, and further preferably 28% by weight. The upper limit thereof is preferably 40% by weight, more preferably 35% by weight, and further preferably 33% by weight. If the amount of vinyl acetate is less than 20% by weight, the interlayer film for laminated glass may become too hard so that the penetration resistance thereof is lowered. If the amount of vinyl acetate is more than 40% by weight, the break resistance and the shock impact resistance of the interlayer film for laminated glass may be lowered. To provide a laminated glass having a lower haze value, the amount of vinyl acetate preferably exceeds 28% by weight. The "amount of vinyl acetate" is measured in accordance with JIS K 6730 "Testing methods for ethylene/vinyl acetate copolymer materials".

Compared to the case where only the ethylene-vinyl acetate copolymer is used, only a slight amount of the resin A or Aa added to the ethylene-vinyl acetate copolymer can further enhance the adhesiveness of the interlayer film when the resin A or Aa and the ethylene-vinyl acetate copolymer are used in combination. As a result, both high adhesiveness and high transparency can be achieved. Namely, the interlayer film comprising both the resin A or Aa and the ethylene-vinyl acetate copolymer and the interlayer film comprising only the ethylene-vinyl acetate copolymer have different adhesiveness. With regard to the amounts of the resin A or Aa and the ethylene-vinyl acetate copolymer, the amount of the resin A or Aa is preferably 0.01% to 99.99% by weight, more preferably 1% to 70% by weight, and further preferably 5% to 70% by weight in 100% by weight of a sum of the resin A or Aa and the ethylene-vinyl acetate copolymer. The lower limit of the amount of the resin A or Aa is 5% by weight, more preferably 10% by weight, and further preferably 20% by weight. The upper limit thereof is preferably 50% by weight. The amount of the resin A or Aa and the ethylene-vinyl acetate copolymer within the above-mentioned range can provide an interlayer film for laminated glass having sufficiently high adhesiveness and transparency.

The interlayer film for laminated glass according to the present invention may contain a thermoplastic resin such as ethylene-vinyl acetate-glycidyl (meth)acrylate coplymers, ethylene-glycidyl (meth)acrylate coplymers, polyvinyl acetal resins, and vinyl chloride resins.

The interlayer film for laminated glass according to the present invention preferably comprises a compound having an amino group as an adhesive modifier. A compound having an amino group can further enhance the adhesiveness of the obtained interlayer film for laminated glass to components for laminated glass such as a PET film. One type of the compound having an amino group may be used, or alternatively, two or more types of the compound having an amino group may be used in combination.

The compound having an amino group is preferably a silane coupling agent. The silane coupling agent preferably has an alkoxy group and an amino group. Examples of the alkoxy group include a methoxy group and an ethoxy group. A silane coupling agent having an amino group may further enhance the adhesiveness of the obtained interlayer film for laminated glass to components for laminated glass such as a PET film. One type of the silane coupling agent having an amino group may be used, or alternatively, two or more types of the silane coupling agent having an amino group may be used in combination.

The silane coupling agent having an amino group is not particularly limited. Examples thereof may include N-(2-aminoethyl)-3-aminopropyltrimethoxysilane, N-(2-amincethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyldimethylethoxysilane, 3-aminopropylmethyldiethoxysilane, 3-aminopropyltrimethoxysilane, 3-aminopropyltrimethoxysilane, and 3-aminopropyltriethoxysilane.

In 100 parts by weight of the resin component included in the interlayer film for laminated glass, the compound having an amino group is preferably contained within the range of 0.01 to 4 parts by weight. Further, in 100 parts by weight of the resin A or Aa, the compound having an amino group is preferably comprised within the range of 0.01 to 4 parts by weight. When the amount of the compound having an amino group is less than 0.01 parts by weight, the addition of the compound having an amino group may make it difficult to produce a sufficient effect. On the other hand, when the amount of the compound having an amino group is more than 4 parts by weight, the obtained interlayer film for laminated glass may be discolored to yellow. A more preferable lower limit of the amount of the compound having an amino group is 0.02 parts by weight and a more preferable upper limit thereof is 2 parts by weight in 100 parts by weight of the resin component or 100 parts by weight of the resin A or Aa.

The interlayer film for laminated glass according to the present invention may contain another silane coupling agent other than the above-mentioned compound having an amino group as an adhesive modifier. Further, the interlayer film for laminated glass according to the present invention may contain a modified silicone oil or the like as an adhesive modifier.

Examples of the another silane coupling agent include vinyltriethoxysilane, vinyltrimethoxysilane, vinyltriacetoxysilane, vinyltrichlorosilane, 3-glycidoxypropyltrimethoxysilane, 3-mercaptopropyltrimethoxysilane, 3-mercaptopropylmethyldimethoxysilane, 3-chloropropyltrimethoxysilane, 3-chloropropyltriethoxysilane, 3-methacryloxypropyltrimethoxysilane, 3-methacryloxypropyltriethoxysilane, 2-(3,4-epoxycyclohexyl)ethyltrimethoxysilane, ethyltrimethoxysilane, propyltrimethoxysilane, propyltriethoxysilane, dodecyltriethoxysilane, hexyltrimethoxysilane, isobutyldiethoxysilane, methylphenyldiethoxysilane, and methylphenyldimethoxysilane.

The interlayer film for laminated glass according to the present invention may contain an acid-modified polyolefin. The acid-modified polyolefin is not particularly limited, provided that it is a polyolefin modified by an acid. Examples of the acid-modified polyolefin include a polyolefin modified by maleic acid, fumaric acid, chloromaleic acid, himic acid, citraconic acid, and itaconic acid.

The interlayer film for laminated glass according to the present invention may contain inorganic particles. The inorganic particles are not particularly limited. Examples of the inorganic particles include calcium carbonate, aluminum oxide, kaolinite (Al₂O₃·2SiO₂·2H₂O), dolomite (CaMg(CO₃)₂), calcium silicate, magnesium oxide, magnesium hydroxide, calcium hydroxide, magnesium carbonate, titanium oxide, silicon dioxide, and a glass bead. In particular, the inorganic particles are preferably one kind selected from the group consisting of calcium carbonate, dolomite, magnesium hydroxide, calcium hydroxide, and titanium oxide.

The lower limit of the average particle size of the inorganic particles is preferably 0.1 µm and the upper limit thereof is preferably 100 µm. When the average particle size is less than 0.1 µm, the visible light transmission of the interlayer film for laminated glass may not be sufficiently lowered. When the average particle size is more than 100 µm, a deposit called gum may generate in extrusion molding of the interlayer film for laminated glass. The lower limit of the average particle size is more preferably 0.2 µm and the upper limit thereof is more preferably 20 µm.

The "average particle size" can be measured by laser diffraction-scattering with use of a Microtrac Particle Size Analyzer (e.g. "MicrotracFRA" manufactured by NIKKISO CO., LTD.).

The interlayer film for laminated glass according to the present invention may contain various additives if needed. Examples of the additives include a light shielding agent, a coloring agent such as a pigment and a dye, an antioxidant, a light stabilizer, a fire retardant, an antistatic agent, a moisture proof agent, an ultraviolet ray absorbent, a heat reflective agent, and a heat absorbent.

Examples of the light shielding agent include carbon black and red iron oxide.

The coloring agent is preferably a pigment. Examples of the pigment include a mixed pigment in a color of dark reddish brown comprising: carbon black as a black pigment; a red pigment (C. I. Pigment red) ; a blue pigment (C. I. Pigment blue); and a yellow pigment (C. I. Pigment yellow).

Examples of the ultraviolet ray absorbent include a malonate ester compound, an anilide oxalate compound, a benzotriazole compound, a benzophenone compound, a triazine compound, a benzoate compound, and a hindered amine compound. Among these, a benzotriazole compound is preferable.

Examples of the benzotriazole compound include 2-(2'-hydroxy-5'-methylphenyl) benzotriazol, 2-(2'-hydroxy-3',5'-di-t-butylphenyl) benzotriazol, 2-(2'-hydroxy-3'-t-butyl--5'-methylphenyl)-5-chlorobenzotria zol, 2-(2'-hydroxy-3',5'-di--amyl phenyl) benzotriazol, 2,2-methylenebis [4-(1,1,3,3-tetramethylbutyl)-6-(2H-benzotriazol-2-yl) phenol] and 2-(2H-benzotriazol-2-yl)-4,6-di-t-pentylphenol.

Examples of the antioxidant include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl) propionate, 2,2'-methylenebis-(4-methyl-6-butyl phenol), 2,2'-methylenebis-(4-ethyl-6-t-butyl phenol), 4,4'-butylidene-bis-(3-methyl-6-t-butyl phenol), 1,1,3-tris-(2-methyl-hydroxy-5-t-butylphenylbutane), tetrakis-[methylene-3-(3',5'-di-t-butyl-4'-hydroxyphenyl) propionate] methane, 1,3,3-tris-(2-methyl-4-hydroxy-5-t-butyl phenol) butane, 1,3,5-trimethyl-2,4,6-tris(3,5-di-t-butyl-4-hydroxybenzyl) benzene,bis(3,3'-t-butyl phenol)butyric acid) glycol ester, t-butyl hydroxytoluene, and pentaerythrityl-tetrakis [3-(3,5-di-t-butyl-4-hydroxyphenyl) propionate].

Examples of the plasticizer include: phthalate ester such as triethylene glycol-di-2-ethylhexanoate (3GO), dioctyl phthalate (DOP), dibutyl phthalate (DBP), and diisodecyl phthalate (DIDP); adipic acid ester such as adipate di-2-ethylhexyl (DOA) and diisodecyl adipate (DIDA); Sebacic acid ester such as dibutyl sebacate (DBS) and sebacate di-2-ethylhexyl (DOS); phosphate ester such as tricresyl phosphate (TCP) and trioctyl phosphate (TOP); and epoxidized soybean oil.

The interlayer film for laminated glass according to the present invention may be monolayer or multilayer. For example, the interlayer film for laminated glass according to the present invention may have a multilayer structure in which two or more resin layers are laminated in order to improve the sound insulation.

The thickness of the interlayer film for laminated glass according to the present invention is not particularly limited. The thickness of the interlayer film for laminated glass is preferably in the range of 0.1 to 3 mm. When the thickness of the interlayer film for laminated glass is less than 0.1 mm, penetration resistance of the obtained laminated glass may be lowered. When the thickness of the interlayer film for laminated glass is more than 3 mm, it may be too thick to be used in the laminated glass. The lower limit of the interlayer film for laminated glass is more preferably 0.25 mm and the upper limit thereof is more preferably 1.5 mm.

A production method of the interlayer film for laminated glass according to the present invention is not particularly limited, provided that the resin A or Aa comprising the first to third structural units is used to produce the interlayer film for laminated glass. Examples thereof include a production method comprising kneading the resin A or Aa with other materials blended according to need and extrusion-molding the kneaded substance to produce an interlayer film for laminated glass. A production method comprising extrusion-molding the material including the resin A or Aa is preferable because it is suitable for continuous production.

A masterbatch containing the resin A or Aa and the other materials may be used to produce the interlayer film for laminated glass. For example, a pelletized masterbatch can be obtained as follows: heating raw materials including the resin A or Aa to a predetermined temperature; kneading the heated materials; and cutting the kneaded material into a desired size with use of a pelletizer. For another example, a pelletized masterbatch can be obtained as follows: kneading raw materials including the resin A or Aa with use of a batch-type kneader; and pelletizing the kneaded materials. The masterbatch is extrusion-molded into a sheet shape with use of an extruder so that an interlayer film for laminated glass is obtained.

A method of kneading the raw materials is not particularly limited. Examples thereof include a use of an extruder, plastograph, kneader, banburymixer, or calendar roll. Among these, an extruder, especially a twin screw extruder, is preferably used because it is suitable for continuous production.

### (Laminated glass)

The interlayer film for laminated glass according to the present invention is used to obtain a laminated glass.

Fig. 1 illustrates a laminated glass according to one embodiment of the present invention.

A laminated glass 1 illustrated in Fig. 1 comprises an interlayer film 2 for laminated glass and a first and a second component 3, 4 for laminated glass. The interlayer film 2 for a laminated glass is interposed between the first and the second component 3, 4 for laminated glass. Accordingly, the first component 3 for laminated glass, the interlayer film 2 for a laminated glass, and the second component 4 for laminated glass are laminated in this order to form the laminated glass 1.

The interlayer film 2 for a laminated glass contains the resin A or the resin Aa having structural units represented by the formulae (1) to (3).

The first component 3 for a laminated glass is a PET film. The first component 3 for a laminated glass may also be a glass plate. The second component 4 for a laminated glass is a glass plate. The second component 4 for a laminated glass may also be a PET film.

One of the first and second components 3, 4 for laminated glass is preferably a polyethylene terephthalate film (PET film). Since the interlayer film 2 for a laminated glass comprises the resin A or the resin Aa, its adhesiveness to a PET film can be enhanced.

It is to be noted that the "laminated glass" includes not only a laminated glass comprising an interlayer film for laminated glass interposed between two glass plates, but also a laminated glass comprising an interlayer film for laminated glass interposed between a glass plate and a PET film. The "laminated glass" is preferably a laminated body including glass plates. At least one glass plate is preferably used therein. On the outer surface of the first and second components for laminated glass, another component for laminated glass may be further laminated.

Examples of the glass plate include inorganic glass and organic glass. Examples of the inorganic glass include a transparent colored glass plate such as green glass, a float glass plate, a heat reflecting glass plate, a heat absorbing glass plate, a polished glass plate, a molding glass plate, and a wire glass plate. The organic glass is plastic glass substituting for inorganic glass. Examples of the organic glass include a polycarbonate plate and a poly(meth)acrylic resin plate. Examples of the poly(meth)acrylic resin plate include a polymethyl (meth)acrylate plate. Namely, the "laminated glass" include a laminated glass comprising the first and second components 3, 4 for laminated glass, which are a PET film or an organic glass such as a polycarbonate plate and a poly(meth)acrylic resin plate. Further, the interlayer film for laminated glass according to the present invention may have high adhesiveness not only to a PET film, but also to the inorganic glass and the organic glass.

The thickness of the PET film is not particularly limited. The thickness of the PET film is preferably in the range of 0.03 to 0.5 mm. Further, the thickness of the glass plate is not particularly limited. The thickness of the glass plate is preferably in the range of 1 to 3 mm.

A production method of the laminated glass according to the present invention is not particularly limited. For example, a laminated glass is obtained as follows: interposing an interlayer film for laminated glass between the first and the second component for laminated glass; pressurizing the laminated body with use of a pressing roll or vacuum-drawing the laminated body in a rubber bag so as to eliminate air left among the components for laminated glass and the interlayer film for laminated glass; and pre-bonding the laminated body at a temperature of about 70 to 110°C. Further, the obtained laminated glass may be pressure-bonded at a temperature of about 120 to 150°C and at a pressure of 1 to 1.5 MPa in an autoclave or by pressing.

The present invention is described in more detail with reference to examples. It is to be noted that the present invention is not limited only to the following examples.

Materials mentioned below were prepared to produce an interlayer film for laminated glass.

### [Material 1 corresponding to the EVA]

Ethylene-vinyl acetate copolymers (67% by weight of ethylene, 33% by weight of vinyl acetate, Melt flow rate of 1 g/10 min.)

### [Material 2 corresponding to the resin A or Aa]

Ethylene-methyl acrylate-glycidyl methacrylate copolymers (manufactured by ARKEMA Inc., trade name "Lotader GMA AX8900", 68% by weight of ethylene as the first structural unit, 24% by weight of methyl acrylate as the second structural unit, 8% by weight of glycidyl methacrylate as the third structural unit, Melt flow rate of 6 g/10 min.)

### [Material 3]

Ethylene-vinyl acetate-glycidyl methacrylate copolymers (manufactured by Sumitomo Chemical Co., Ltd., trade name "Bondfast 2B", 83% by weight of ethylene, 5% by weight of vinyl acetate, 12% by weight of glycidyl methacrylate, Melt flow rate of 3 g/10 min.)

### [Material 4 corresponding to the resin A or Aa]

Ethylene-methyl acrylate-glycidyl methacrylate copolymers (manufactured by Sumitomo Chemical Co., Ltd., trade name "Bondfast 7M", 67% by weight of ethylene as the first structural unit, 27% by weight of methyl acrylate as the second structural unit, 6% by weight of glycidyl methacrylate as the third structural unit, Melt flow rate of 7 g/10 min.)

### [Material 5 corresponding to the silane coupling agent having an amino group]

N-(2-aminoethyl)-3-aminopropylmethyldimethoxysilane

[Material 6 corresponding to the silane coupling agent having an amino group] 3-aminopropyltrimethoxysilane

### [Material 7 corresponding to the silane coupling agent having an amino group]

N-2-(aminoethyl)-3-aminopropylmethyltrimethoxysilane

### [Material 8 corresponding to the EVA]

Ethylene-vinyl acetate copolymers (72% by weight of ethylene, 28% by weight of vinyl acetate, Melt flow rate of 1 g/10 min.)

### [Material 9 corresponding to the resin A or Aa]

Ethylene-methyl acrylate-glycidyl methacrylate copolymers (manufactured by ARKEMA Inc., trade name "Lotader GMA AX8950", 78% by weight of ethylene as the first structural unit, 14% by weight of methyl acrylate as the second structural unit, 8% by weight of glycidyl methacrylate as the third structural unit, Melt flow rate of 85 g/10 min.)

### [Material 10]

Ethylene-glycidyl methacrylate copolymers (manufactured by ARKEMA Inc., trade name "Lotader GMA AX8840", 92% by weight of ethylene as the first structural unit, 8% by weight of glycidyl methacrylate as the third structural unit, Melt flow rate of 5 g/10 min.)

### [Material 11 corresponding to the resin A or Aa]

Ethylene-methyl acrylate-glycidyl methacrylate copolymers (manufactured by Sumitomo Chemical Co. , Ltd., trade name "Bondfast 7L", 70% by weight of ethylene as the first structural unit, 27% by weight of methyl acrylate as the second structural unit, 3% by weight of glycidyl methacrylate as the third structural unit, Melt flow rate of 7 g/10 min.)

### (Examples 1 to 62 and Comparative Examples 1 to 6)

Materials shown in the below Table 1 were dry-blended at blending ratios (in units of parts by weight) mentioned in the below Table 1. Each blended material was charged into an extruder and extrusion-molded to produce an interlayer film for laminated glass in a thickness of 0.8 mm.

### (Evaluation)

### (1) Transparency

The obtained interlayer film for laminated glass was cut to produce an interlayer film sample (5 cm in height x 5 cm in width).

The obtained interlayer film sample was interposed between two glass plates (5 cm in height x 5 cm in width x 2.5 mm in thickness) to produce a laminated body. Next, the laminated body was placed in a rubber bag and deaerated at a vacuum of 2.6 kPa for 20 minutes. The laminated body was kept as deaerated in an oven at a temperature of 90°C for 30 minutes to produce a laminated glass sample.

Haze of the obtained laminated glass was measured in accordance with ASTM D 1003. The lower Haze indicates high transparency.

### (2A) Adhesiveness A (Peel strength)

The obtained interlayer film for laminated glass was pressed to a thickness of 0.4 mm to produce an interlayer film sample (2 cm in height x 10 cm in width).

A first PET film (2 cm in height x 5 cm in width) as a spacer was placed on one face of the obtained interlayer film sample in a manner that three ends thereof were aligned with those of the interlayer film sample. Next, a second PET film (2 cm in height x 10 cm in width) was placed on the interlayer film sample with the first PET film placed thereon in a manner that the second PET film covers the upper faces of the interlayer film sample and the first PET film.

The interlayer film sample with the first and second PET films placed thereon was interposed between two glass plates (2 cm in height x 10 cm in width) to produce a laminated body. Next, the laminated body was placed in a rubber bag and deaerated at a vacuum of 2.6 kPa for 20 minutes. The laminated body was kept as deaerated in an oven at a temperature of 90°C for 30 minutes to produce a laminated glass sample.

The glass plate laminated on the second PET film was peeled off from the laminated glass sample so that the second PET film was exposed. Next, the second PET film was bent at an angle of 180 degrees while the end portion thereof positioned over the first PET film was held. Then, the second PET film was peeled off from the interlayer film sample at a pulling speed of 200 mm/minute so that 180 degree peel strength was measured.

### (2B) Adhesiveness B (Peel strength)

The 180 degree peel strength was measured in the same manner as the measuring of the adhesiveness A, except that the size of the interlayer film sample, the second PET film, and two glass plate was changed from 2 cm in height x 10 cm in width to 2 cm in height x 11 cm in width, and that the size of the first PET film was changed from 2 cm in height x 5 cm in width to 2 cm in height x 6 cm in width.

The results are shown in Tables 1 to 6 below. With respect to the measurements of the peel strength in the Tables 1 to 6, measurements of (2A) Peel strength A are shown for Examples 1, 5, 7, 11, 58, and 61 and Comparative Examples 1, 3, and 4. Further, measurements of (2B) Peel strength B are shown for Examples and Comparative Examples other than the above mentioned Examples and Comparative Examples. It is to be noted that the measurements of the adhesiveness A and the adhesiveness B are almost the same with respect to the same interlayer film sample.

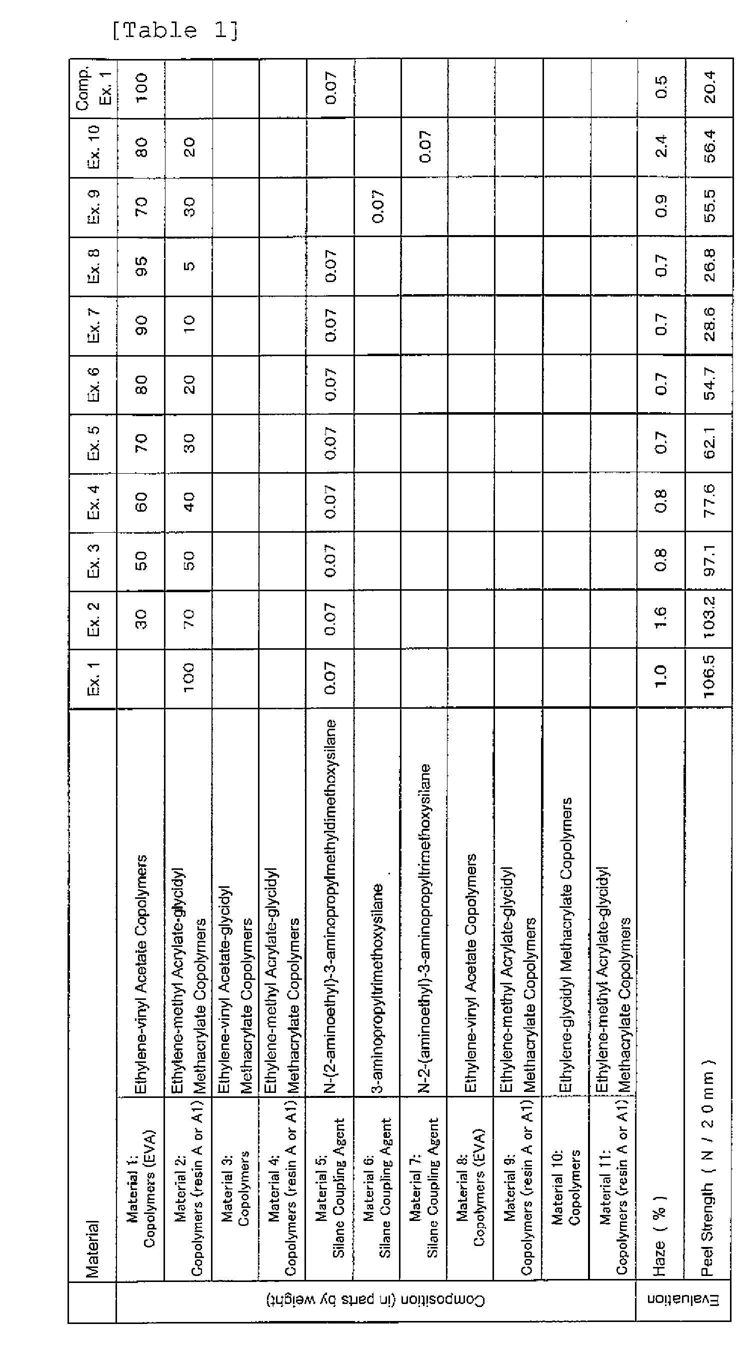

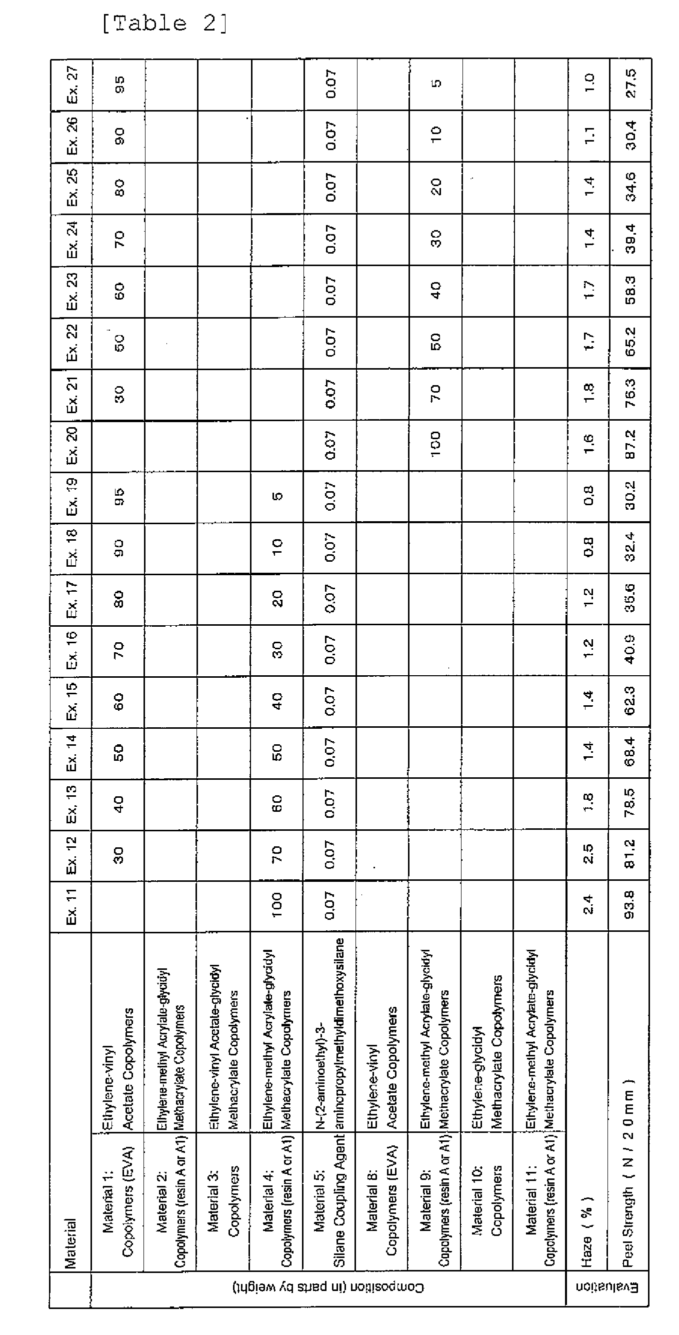

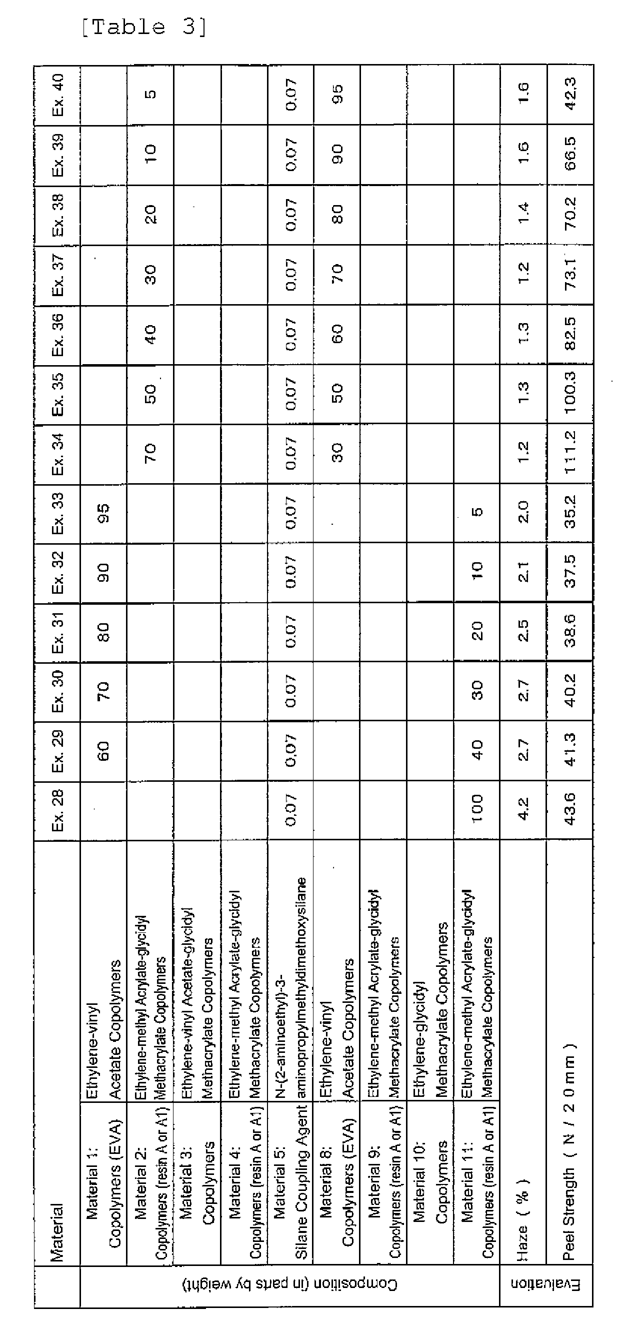

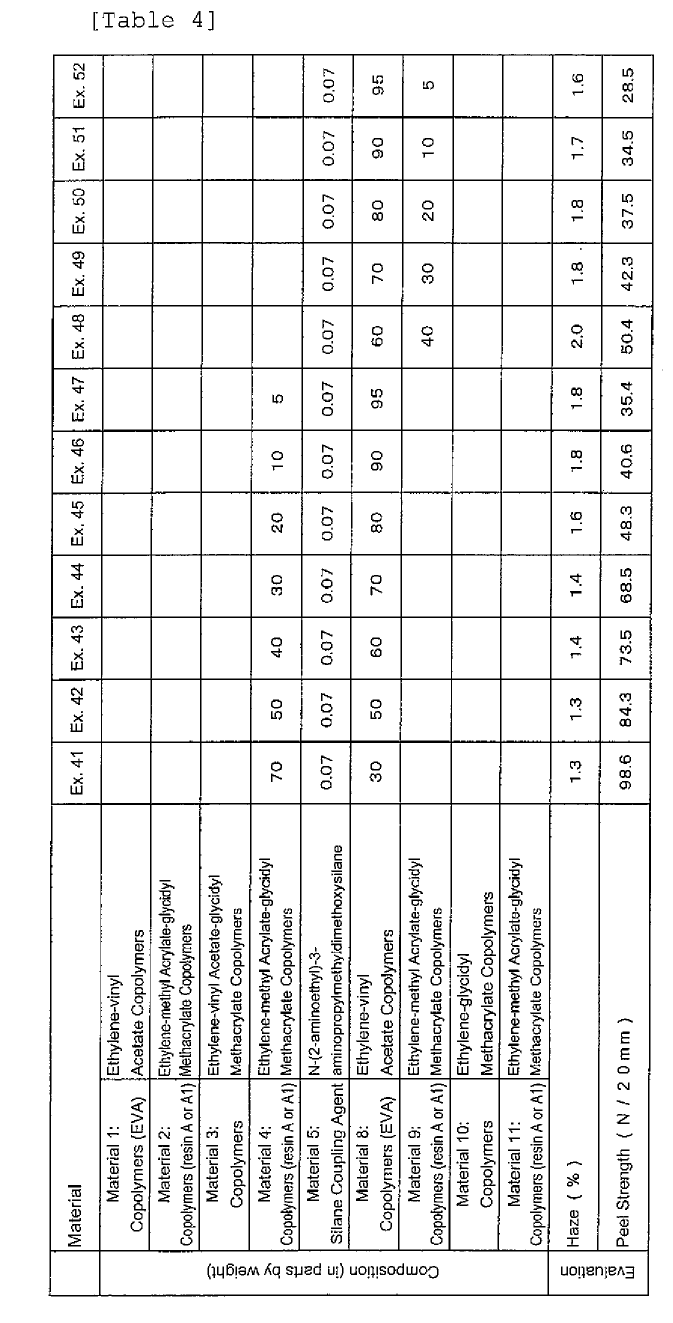

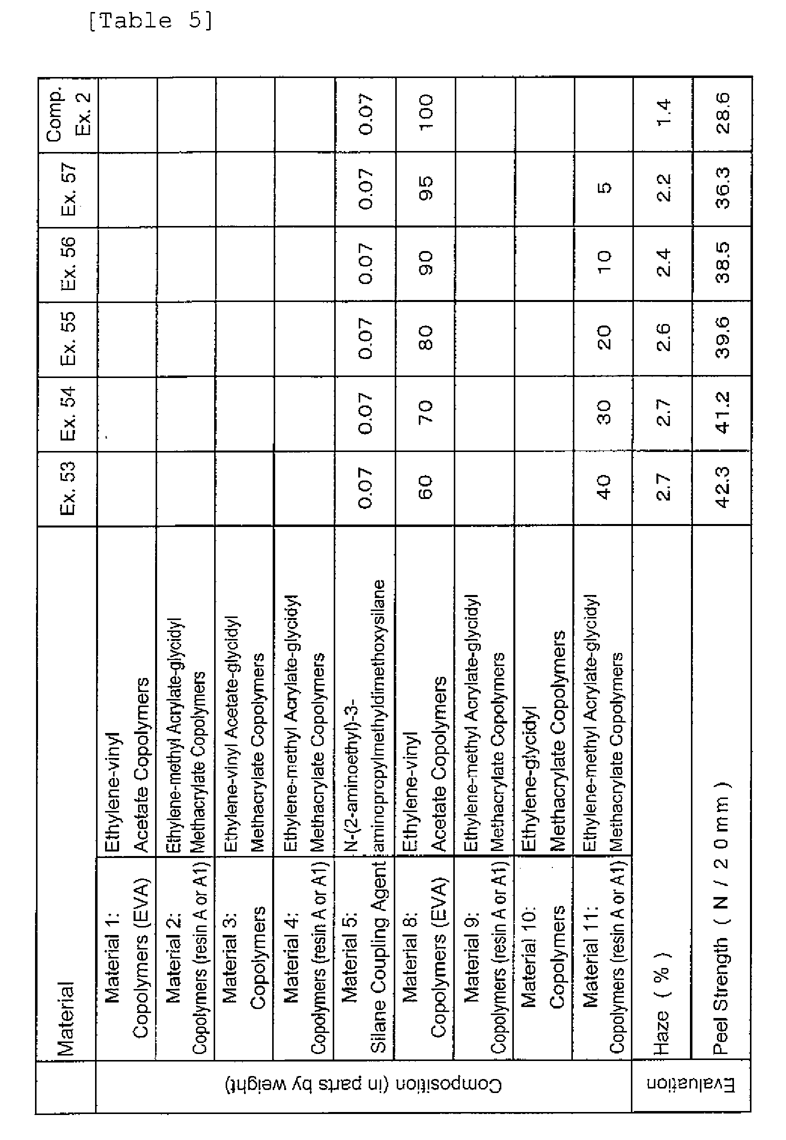

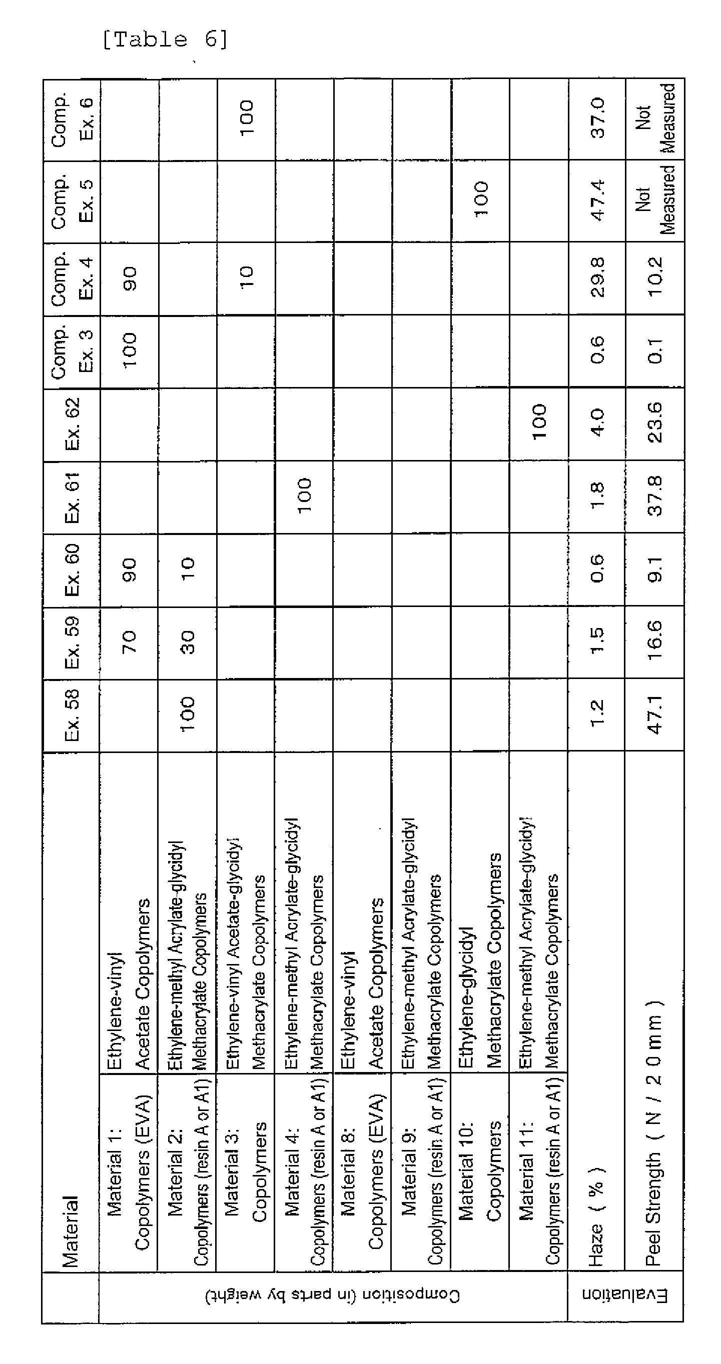

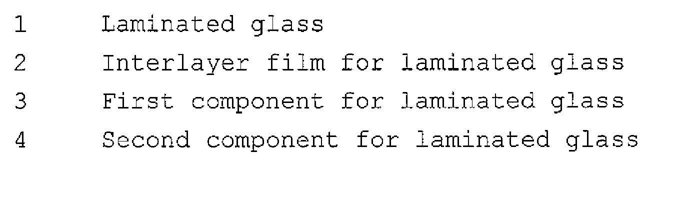

## Claims

1. An interlayer film for laminated glass,
which comprises
a resin including an ethylene structural unit, a (meth)acrylate ester structural unit, and a structural unit having a glycidyl group.

2. The interlayer film for laminated glass according to Claim 1,
which comprises
a resin including a first structural unit represented by a following formula (1), a second structural unit represented by a following formula (2), and a third structural unit represented by a following formula (3):
[Chem. 1] *⁅CH₂-CH₂⁆* Formula (1) 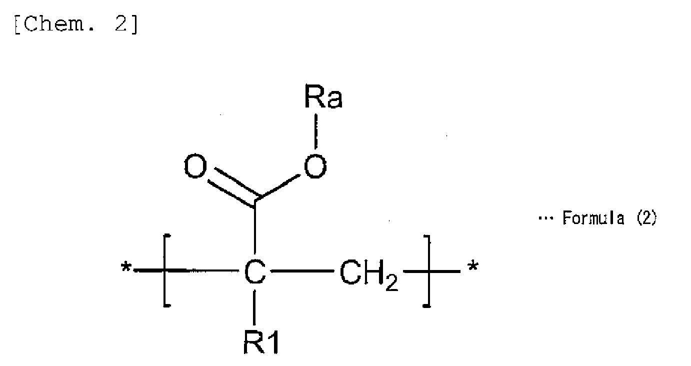
wherein R1 represents a hydrogen atom or a methyl group, and Ra represents an alkyl group having 1 to 5 carbon atoms; and 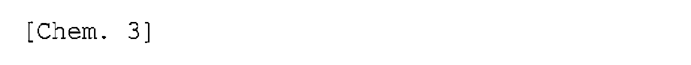 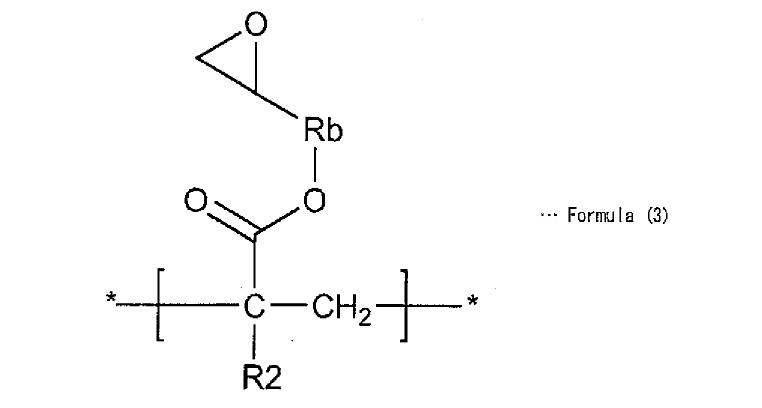 wherein R2 represents a hydrogen atom or a methyl group, and Rb represents an alkylene group having 1 to 5 carbon atoms.

3. The interlayer film for laminated glass according to Claim 2,
wherein an amount of the first structural unit represented by the formula (1) is larger than a sum of an amount of the second structural unit represented by the formula (2) and an amount of the third structural unit represented by the formula (3).

4. The interlayer film for laminated glass according to Claim 3,
wherein the resin includes 67 to 78% by weight of the first structural unit represented by the formula (1), 14 to 27% by weight of the second structural unit represented by the formula (2), and 3 to 8% by weight of the third structural unit represented by the formula (3).

5. The interlayer film for laminated glass according to Claim 2,
which further comprises an ethylene-vinyl acetate copolymer.

6. The interlayer film for laminated glass according to Claim 5,
wherein an amount of the resin including the first structural unit represented by the formula (1), the second structural unit represented by the formula (2), and the third structural unit represented by the formula (3) is 5% to 70% by weight in 100% by weight of a sum of the resin and the ethylene-vinyl acetate copolymer.

7. The interlayer film for laminated glass according to Claim 1 or 2,
which further comprises a compound having an amino group.

8. The interlayer film for laminated glass according to Claim 7,
wherein the compound having an amino group is a silane coupling agent.

9. A production method of an interlayer film for laminated glass,
which comprises
producing an interlayer film for laminated glass with use of a resin including an ethylene structural unit, a (meth)acrylate ester structural unit, and a structural unit having a glycidyl group.

10. The production method of an interlayer film for laminated glass according to Claim 9,
which comprises
producing an interlayer film for laminated glass with use of a resin including a first structural unit represented by a following formula (1), a second structural unit represented by a following formula (2), and a third structural unit represented by a following formula (3):
[Chem. 4] *⁅CH₂-CH₂⁆* Formula (1) 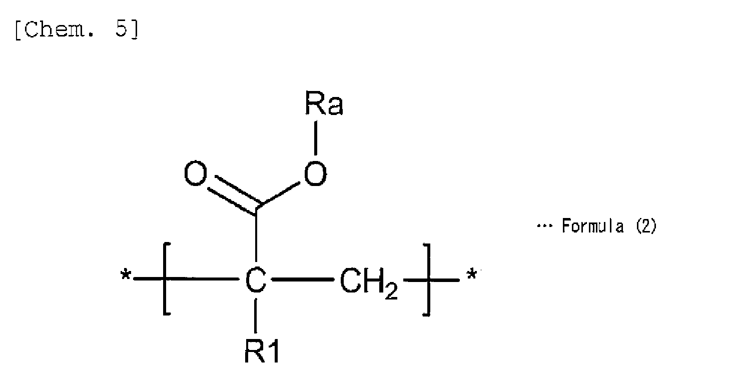
wherein R1 represents a hydrogen atom or a methyl group, and Ra represents an alkyl group having 1 to 5 carbon atoms; and 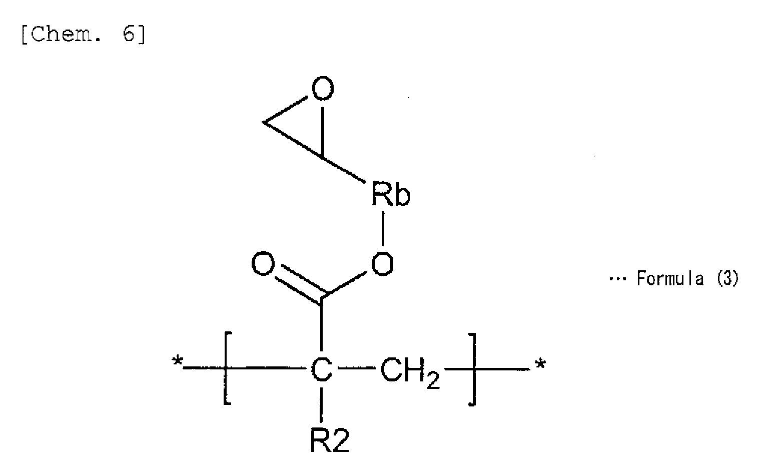 wherein R2 represents a hydrogen atom or a methyl group, and Rb represents an alkylene group having 1 to 5 carbon atoms.

11. A laminated glass
which comprises:
a first and a second components for laminated glass; and
an interlayer film for laminated glass according to any of Claims 1 to 6, the interlayer film being interposed between the first and the second component for laminated glass.

12. The laminated glass according to Claim 11, wherein one of the first and the second component for laminated glass is a polyethylene terephthalate film.
